# EUROPEAN PATENT APPLICATION

(11) **EP 4 663 513 A1**
(43) Date of publication of application: **17.12.2025**
(21) Application number: 25150131.8
(22) Date of filing: 03.01.2025
(51) Int. Cl.: B62D 5/04, F16H 1/06

(54) **STEERING FEEDBACK ACTUATOR**

(30) Priority: 11.06.2024 KR 20240075629
(71) Applicant: Hyundai Mobis Co., Ltd., Gangnam-gu Seoul 06141 (KR)
(72) Inventor: SON, Chang Wook, 16891 Gyeonggi-do (KR)
(74) Representative: Vossius & Partner Patentanwälte Rechtsanwälte mbB

(57) **Abstract**

A steering feedback actuator includes a housing part (100), a steering column (200) rotatably accommodated within the housing part (100) and arranged in a first direction, a first gear part (300) coupled to the steering column (200) so as to rotate with the steering column (200), and an electric motor part (400) including a motor housing (410) coupled to the housing part (100) to cover an opening (100a) of the housing part (100), and a motor shaft (420) rotatably coupled to the motor housing (410) and having a second gear part (421) engaged with the first gear part (300).

## Description

### BACKGROUND

### FIELD

Embodiments of the present disclosure relate to a steering feedback actuator, and more particularly, to a steering feedback actuator applied to a steer-by-wire (SBW) system.

### DESCRIPTION OF THE RELATED ART

In general, power steering systems for vehicles are hydraulic steering systems that generate hydraulic pressure by using an oil pump driven by engine power to generate steering assistance. As such hydraulic steering systems have the disadvantages of requiring a large number of components and having relatively complex structures, research and development is being conducted on a steer-by-wire (SBW) system that transmits the driver's steering intentions to the driving wheels via electrical signals, without a mechanical connection between the steering wheel and the driving wheels.

A SBW system includes a steering feedback actuator (SFA) and a road wheel actuator (RWA). When the steering wheel rotates, the vehicle's electronic control unit (ECU) receives the steering angle as an electrical signal, and based on this electrical signal, drives the RWA to steer the driving wheels. The SBW system may easily change the steering ratio in response to the driving situation of the vehicle, thereby improving driving comfort and vehicle stability.

Conventional SFAs include a reducer and a motor, wherein the reducer includes a worm reducer, a belt type reducer, and a planetary gear reducer. These reducers have complex mechanisms due to their structural characteristics, resulting in high manufacturing costs and high probability of quality control problems. In addition, such reducers are prone to noise due to gear backlash thereof. Therefore, there is a need to improve these drawbacks.

The Background of the present disclosure is disclosed in Korean Patent Application Publication No. 10-2023-0013858 (published on January 27, 2023 and entitled "Steering Feedback Actuator for Vehicles").

### SUMMARY

The present invention is defined in independent claim 1. Preferred aspects are defined in the dependent claims. Various embodiments are directed to a steering feedback actuator capable of adjusting backlash to solve the above problems.

In an embodiment of the present disclosure, a steering feedback actuator includes: a housing part; a steering column rotatably accommodated within the housing part and arranged in a first direction; a first gear part coupled to the steering column so as to rotate with the steering column; and an electric motor part including a motor housing coupled to the housing part to cover an opening of the housing part, and a motor shaft rotatably coupled to the motor housing and having a second gear part engaged with the first gear part.

The motor shaft may be arranged in the first direction alongside the steering column.

The electric motor part may further include a flange provided in the motor housing so as to be able to abut the housing part and having a first through-hole through which a fastening member to be fastened to a tapped hole in the housing part extends.

The first through-hole may be provided as an elongated opening in a second direction intersecting the first direction.

The first through-hole may have a diameter larger than that of the tapped hole.

The plurality of first through-holes may be spaced apart from each other in a circumferential direction of the flange.

The electric motor part may further include a guide protrusion protruding from the motor housing in the first direction in a circumferential direction of the motor housing and inserted into the housing part.

A gap may be defined between the guide protrusion and the opening to allow the motor housing to move in the second direction.

The housing part may further include a second through-hole provided in the second direction, and the steering feedback actuator may further include a pin part screw-coupled to the second through-hole to support the guide protrusion.

An interaxial distance between the steering column and the motor shaft may be varied depending on a rotation direction of the pin part.

The first gear part may be formed of a plastic material or a metal material, and the second gear part may be formed of a plastic material.

According to the present disclosure, the interaxial distance between the steering column having the first gear part and arranged in the first direction and the motor shaft having the second gear part, engaged with the first gear part, and arranged in the first direction alongside the steering column may be adjusted, so that the backlash between the first gear part and the second gear part may be adjusted.

Furthermore, according to the present disclosure, the first gear part is formed of a metal material and the second gear part, engaged with the first gear part, is formed of a plastic material, so that noise generated by the backlash between the first gear part and the second gear part may be reduced.

### BRIEF DESCRIPTION OF THE DRAWINGS

FIG. 1 is a one-sided cross-sectional view schematically illustrating a steering feedback actuator according to a first embodiment of the present disclosure;
FIG. 2 is an enlarged cross-sectional view of section "A" of FIG. 1;
FIG. 3 is an enlarged perspective view of section "A" of FIG. 1;
FIG. 4 is a cross-sectional view schematically illustrating the coupling relationship between a housing part and an electric motor part in the steering feedback actuator according to the first embodiment of the present disclosure;
FIGS. 5 and 6 are cross-sectional views illustrating the steering feedback actuator according to the first embodiment of the present disclosure, viewed in a first direction;
FIG. 7 is a one-sided cross-sectional view schematically illustrating a steering feedback actuator according to a second embodiment of the present disclosure;
FIG. 8 is an enlarged cross-sectional view of section "A" of FIG. 7;
FIG. 9 is an enlarged perspective view of section "A" of FIG. 7;
FIG. 10 is a cross-sectional view schematically illustrating the coupling relationship between a housing part and an electric motor part in the steering feedback actuator according to the second embodiment of the present disclosure; and
FIGS. 11 and 12 are cross-sectional views illustrating the steering feedback actuator according to the second embodiment of the present disclosure, viewed in a first direction.

### DETAILED DESCRIPTION

Hereinafter, embodiments of the present disclosure will be described with reference to the accompanying drawings. In the description, the thicknesses of the lines or the sizes of the components illustrated in the drawings may be exaggerated for clarity and convenience of explanation. In addition, the terms to be described later are terms defined in consideration of functions in the present disclosure, which may vary depending on the intention of a user or an operator, or a usual practice in the art. Therefore, definitions of these terms should be made based on the entire contents of this specification.

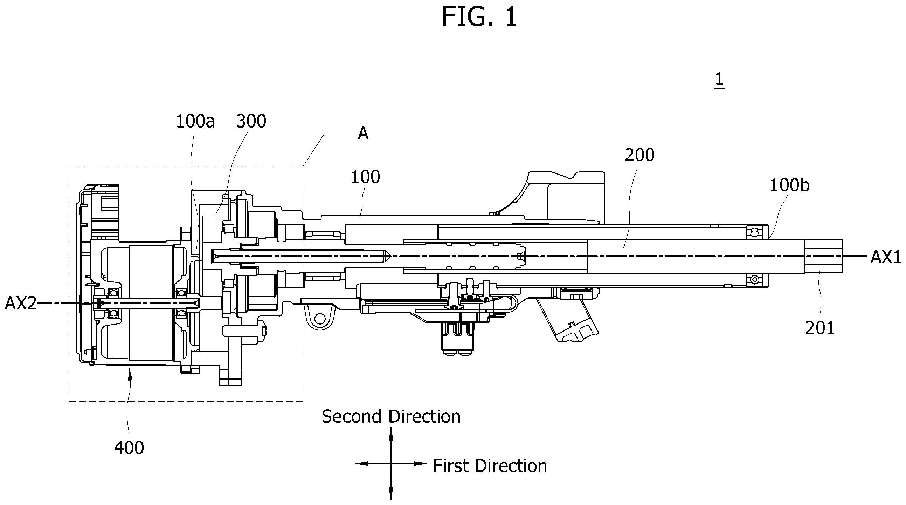

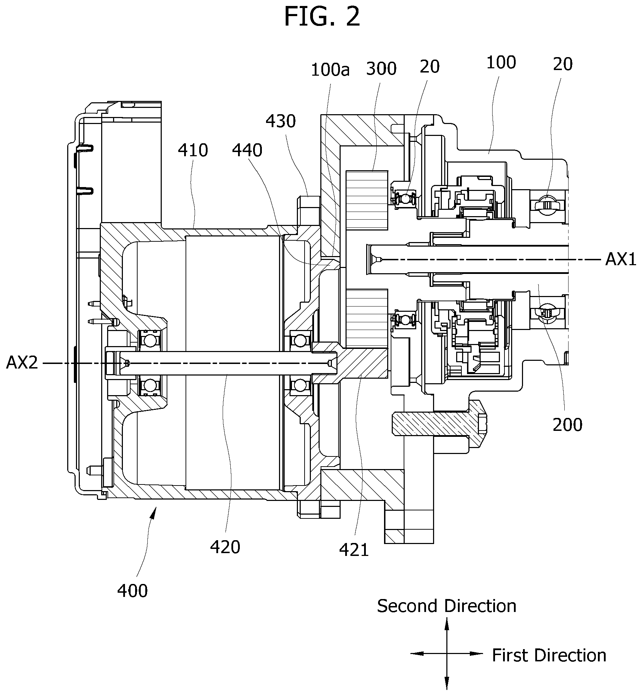

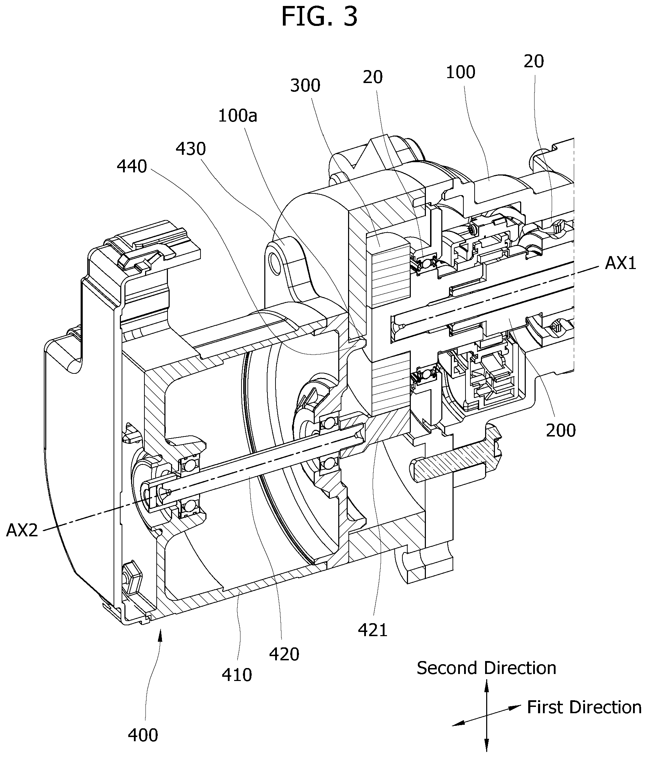

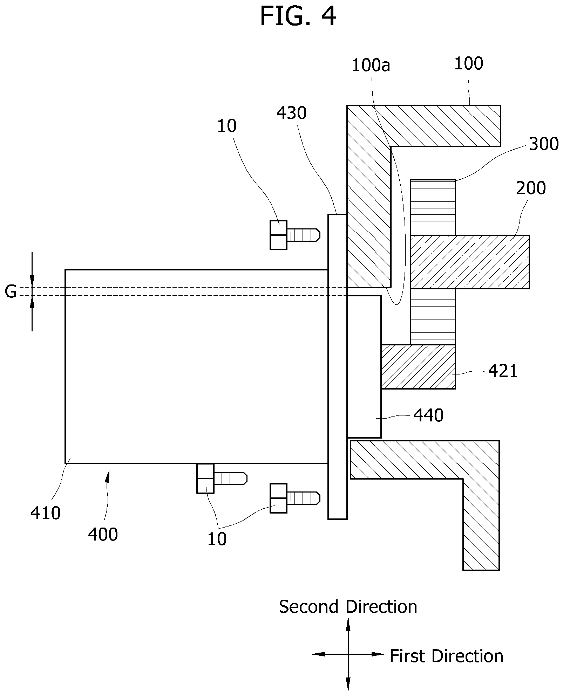

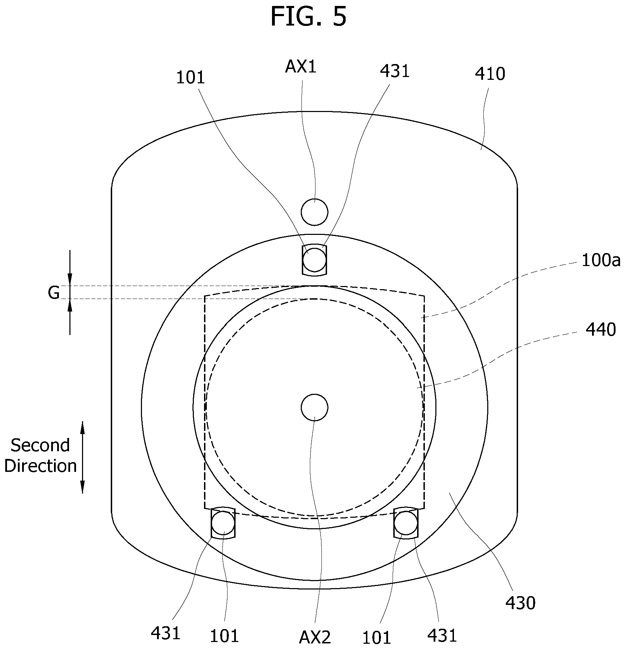

FIG. 1 is a one-sided cross-sectional view schematically illustrating a steering feedback actuator according to a first embodiment of the present disclosure, FIG. 2 is an enlarged cross-sectional view of section "A" of FIG. 1, FIG. 3 is an enlarged perspective view of section "A" of FIG. 1, FIG. 4 is a cross-sectional view schematically illustrating the coupling relationship between a housing part and an electric motor part in the steering feedback actuator according to the first embodiment of the present disclosure, and FIG. 5 is a cross-sectional view illustrating the steering feedback actuator according to the first embodiment of the present disclosure, viewed in a first direction.

Referring to FIGS. 1 to 5, the steering feedback actuator 1 according to the first embodiment of the present disclosure includes a housing part 100, a steering column 200, a first gear part 300, and an electric motor part 400, which will be described in detail as follows.

The housing part 100 forms a schematic outline of the steering feedback actuator 1 according to the first embodiment of the present disclosure, and may generally support the steering column 200, the first gear part 300 and the electric motor part 400, which will be described below.

The specific shape of the housing part 100 is not limited to the shape illustrated in FIG. 1, but various design changes are possible within the technical idea of a shape capable of generally supporting the configuration of the steering feedback actuator 1 according to the first embodiment of the present disclosure.

The housing part 100 may be formed to have the shape of a hollow barrel. The steering column 200 may be accommodated within the housing part 100.

Both longitudinal sides of the housing part 100 may be open. One longitudinal side of the housing part 100 adjacently to the electric motor part 400 to be described later may be provided with an opening 100a. The opening 100a may be formed at one side of the housing part 100 in the longitudinal direction of the housing part 100.

Through-holes 100b may be formed on the other longitudinal side of the housing part 100. The through-holes 100b may be formed at the other side of the housing part 100 in the longitudinal direction of the housing part 100. One side of the steering column 200 may be exposed from the housing part 100 through the through-holes 100b.

The steering column 200 may be axially mounted on an inner side of the housing part 100. The steering column 200 may be arranged in a first direction. Additionally, the steering column 200 may be arranged alongside the longitudinal direction of the housing part 100. That is, the first direction may be the same direction as the longitudinal direction of the housing part 100. Further, the first direction may be the same direction as the direction of the central axis AX1 of the steering column 200.

A spline 201 may be provided on one side of the steering column 200 that is exposed through the through-hole 100b formed on the other longitudinal side of the housing part 100. The spline 201 may be formed on an outer circumferential surface of the steering column 200. A steering wheel (not shown) may be coupled to one side of the steering column 200 on which the spline 201 is formed. Thus, the steering column 200 may be axially rotated in association with the rotation of the steering wheel.

An inner side of the housing part 100 may house bearings 20 that rotatably support the steering column 200. The bearings 20 may be installed between the housing part 100 and the steering column 200. The bearings 20 may be spaced apart from each other in the longitudinal direction of the housing part 100.

The first gear part 300 may be coupled to the steering column 200. The first gear part 300 may be coupled to the other side of the steering column 200 facing the opening 100a formed on one longitudinal side of the housing part 100. The steering column 200 may be axially coupled to the first gear part 300. The other side of the steering column 200 may be axially coupled to the central portion of the first gear part 300.

The first gear part 300 may rotate with the steering column 200. The first gear part 300 may rotate in the same direction as the rotation direction of the steering column 200. The first gear part 300 may include a helical gear.

The first gear part 300 may be formed of a plastic material. In another embodiment, the first gear part 300 may be formed of a metal material, such as steel.

The electric motor part 400 may be coupled to the housing part 100. The electric motor part 400 may be powered from an external power source to generate rotational force. The electric motor part 400 may employ various motors, such as an AC, DC, or BLDC motor, that convert power input from an external power source into rotational force, and may generate reaction force in a direction that prevents the steering column 200 from rotating according to the rotation of the steering wheel.

The reaction force generated by the electric motor part 400 allows the driver rotating the steering wheel to feel a change in steering direction by hand.

The electric motor part 400 may include a motor housing 410, a motor shaft 420, a flange 430, and a guide protrusion 440.

The motor housing 410 may be coupled to the housing part 100. The motor housing 410 may be coupled to one longitudinal side of the housing part 100 where the opening 100a is formed. The motor housing 410 may be arranged adjacently to one longitudinal side of the housing part 100 to cover the opening 100a of the housing part 100. The motor housing 410 may be coupled to the housing part 100 in a direction alongside the longitudinal direction of the housing part 100.

The motor shaft 420 may be rotatably coupled to the motor housing 410. The motor shaft 420 may be arranged in a first direction. The motor shaft 420 may protrude from the motor housing 410 in the first direction. The motor shaft 420 may be inserted into the housing part 100 through the opening 100a of the housing part 100.

The motor shaft 420 may be spaced apart from the steering column 200 and may be arranged alongside the steering column 200. The motor shaft 420 may have a second gear part 421 that meshes with the first gear part 300. The second gear part 421 may be provided on one side of the motor shaft 420 that is inserted into the housing part 100.

The second gear part 421 may be formed of a metal material, such as steel. The second gear part 421 may include a helical gear. The second gear part 421 may be integrally formed with the motor shaft 420.

The flange 430 may be provided on the motor housing 410. The flange 430 may protrude from an outer circumferential surface of the motor housing 410 and may be formed in a circumferential direction of the motor housing 410. The flange 430 may abut an outer surface of the housing part 100 facing the direction in which the motor housing 410 is located.

The flange 430 may be provided with first through-holes 431. The first through-holes 431 may be formed to penetrate the flange 430 in the thickness direction. The first through-holes 431 may be spaced apart from each other in the circumferential direction of the flange 430. At least three first through-holes 431 may be formed in the flange 430.

Fastening members 10 may extend through the first through-holes 431 and fastened to the housing part 100. Each of the fastening members 10 may be illustrated as a bolt or the like that is screw-coupled to the housing part 100. The motor housing 410 may be secured to the housing part 100 by the fastening members 10 being screwed into a tapped hole 101 formed in the housing part 100 through the first through-holes 431.

The first through-holes 431 may be formed in the shape of an elongated opening in a second direction intersecting the first direction. The second direction may refer to a direction of interaxial distance between the central axis AX1 of the steering column 200 and the central axis AX2 of the motor shaft 420. Additionally, the second direction may refer to a direction in which the central axis AX1 of the steering column 200 and the central axis AX2 of the motor shaft 420, which are arranged in parallel, move closer to or away from each other.

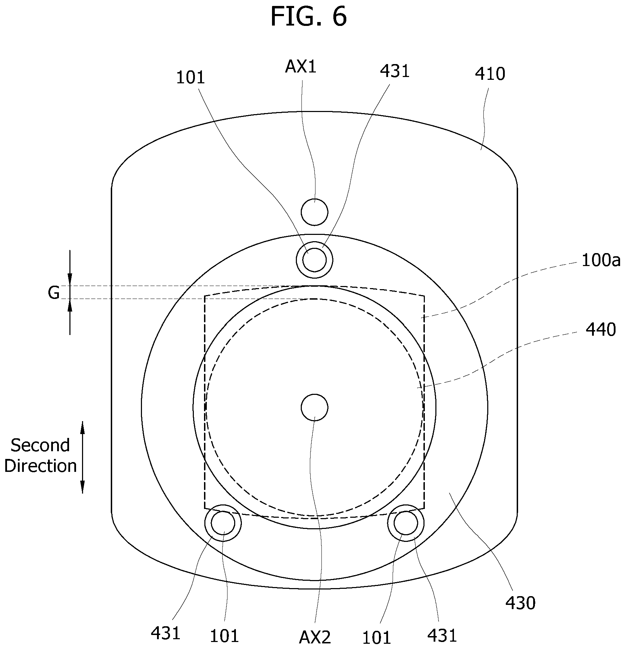

FIG. 6 is a cross-sectional view illustrating the steering feedback actuator according to the first embodiment of the present disclosure, viewed in a first direction.

Referring to FIG. 6, the diameter of the first through-holes 431 may be formed to be larger than the diameter of the tapped hole 101 formed in the housing part 100 through the thickness direction.

The guide protrusion 440 may protrude from the motor housing 410 in a first direction and may be formed in a circumferential direction of the motor housing 410. The guide protrusion 440 may be inserted into the housing part 100 through the opening 100a of the housing part 100.

The diameter of the guide protrusion 440 may be formed to be smaller than the diameter of the opening 100a formed in the housing part 100. A gap G may be formed between the guide protrusion 440 and the opening 100a to allow the motor housing 410 to move in the second direction. The gap G may range from 0.1 cm to 0.3 cm.

The opening 100a may be formed in the shape of an elongated opening in the second direction. Both sides of the opening 100a may be abutted to both sides of the guide protrusion 440. The opening 100a may guide linear movement of the guide protrusion 440.

Prior to attaching the motor housing 410 to the housing part 100, the fastening members 10 are pre-fitted through the first through-holes 431 into the tapped holes 101 formed in the housing part 100, and then the motor housing 410 is moved in the second direction to adjust the interaxial distance between the central axis AX1 of the steering column 200 and the central axis AX2 of the motor shaft 420. This makes it possible to adjust the backlash between the first gear part 300 and the second gear part 421.

As the motor housing 410 is moved in the second direction, the interaxial distance between the steering column 200 and the motor shaft 420 may be varied.

After adjusting the interaxial distance between the central axis AX1 of the steering column 200 and the central axis AX2 of the motor shaft 420, the fastening members 10 are tightened to securely fix the motor housing 410 to the housing part 100 so that the motor housing 410 is not moved in the second direction.

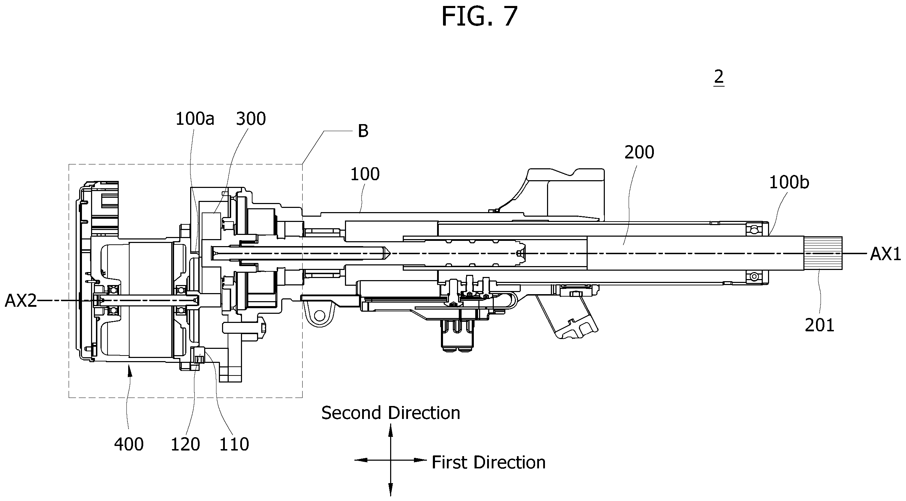

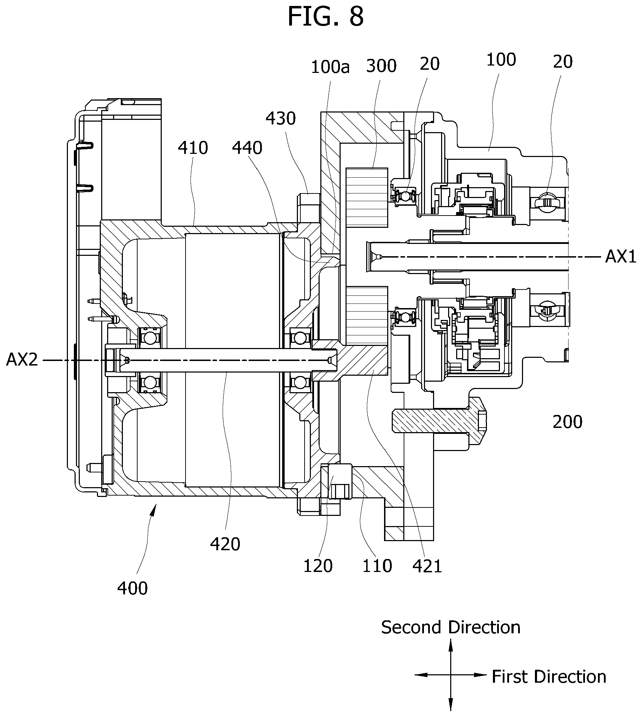

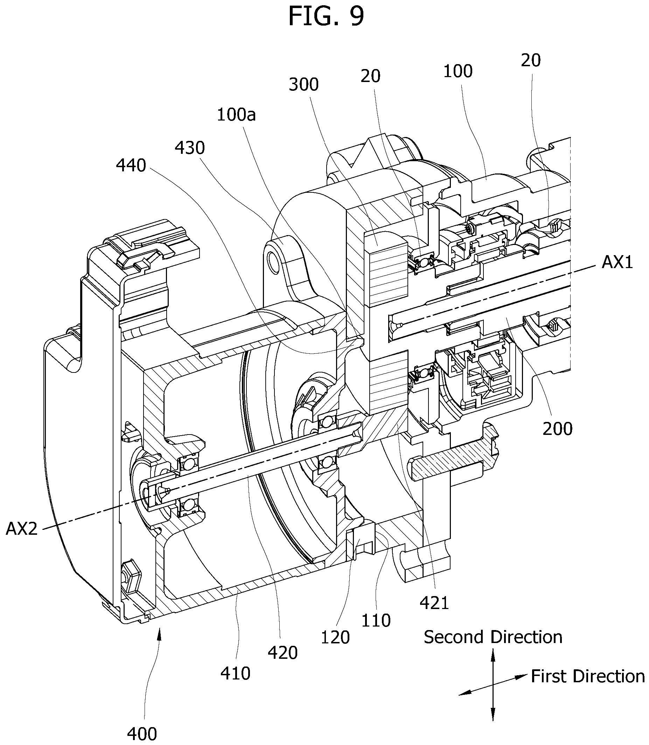

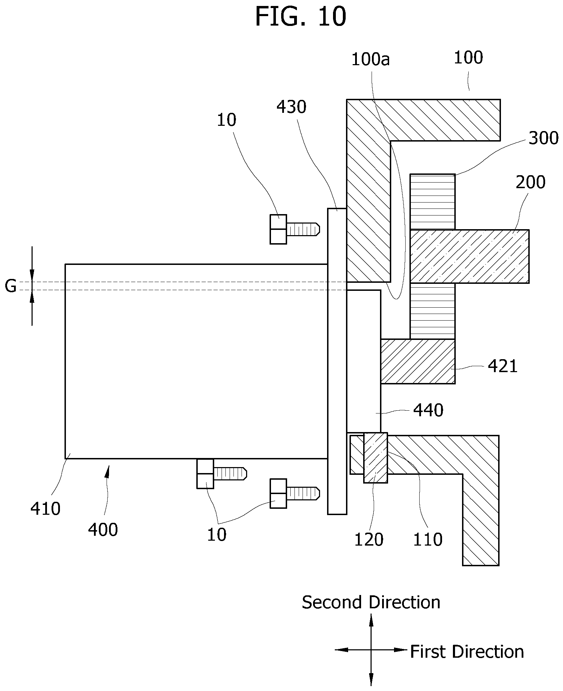

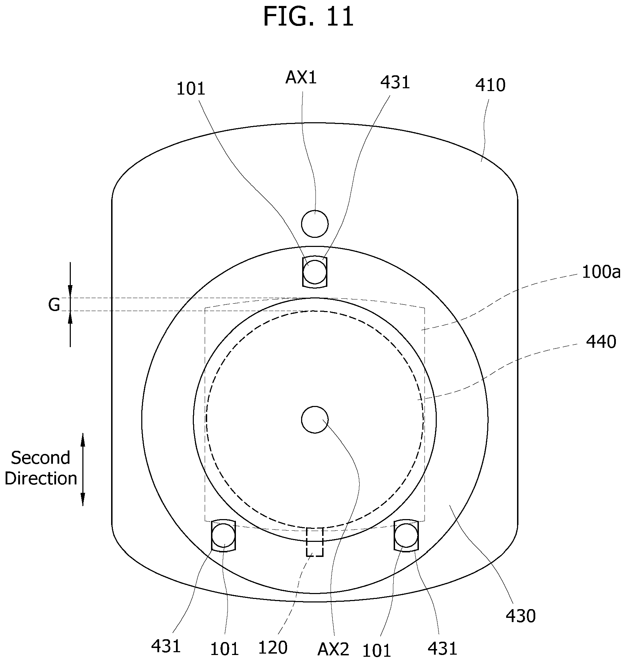

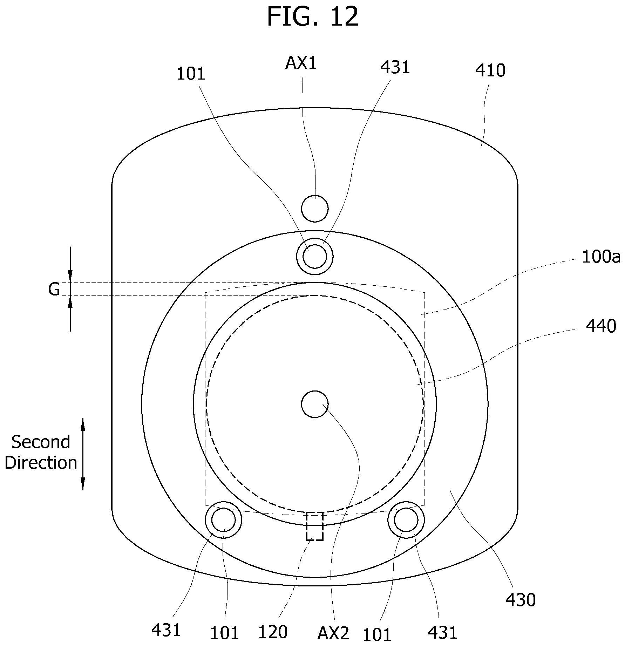

FIG. 7 is a one-sided cross-sectional view schematically illustrating a steering feedback actuator according to a second embodiment of the present disclosure, FIG. 8 is an enlarged cross-sectional view of section "A" of FIG. 7, FIG. 9 is an enlarged perspective view of section "A" of FIG. 7, FIG. 10 is a cross-sectional view schematically illustrating the coupling relationship between a housing part and an electric motor part in the steering feedback actuator according to the second embodiment of the present disclosure, and FIGS. 11 and 12 are cross-sectional views illustrating the steering feedback actuator according to the second embodiment of the present disclosure, viewed in a first direction.

Referring to FIGS. 7 to 12, the steering feedback actuator 2 according to the second embodiment of the present disclosure may include a housing part 100, a steering column 200, a first gear part 300, an electric motor part 400, and a pin part 120.

In describing the steering feedback actuator 2 according to the second embodiment of the present disclosure, only a different embodiment of the housing part 100 of the steering feedback actuator 1 according to the first embodiment and the pin part 120, which was not described in the steering feedback actuator 1 according to the first embodiment of the present disclosure, will be described.

For the rest of the configuration of the steering feedback actuator 2 according to the second embodiment, the description of the steering feedback actuator 1 according to the first embodiment may be applied as it is.

The housing part 100 may be provided with a second through-hole 110. The second through-hole 110 may be formed through an outer circumferential surface of the housing part 100 in a second direction. The second through-hole 110 may be formed on the opening 100a side of the housing part 100. The second through-hole 110 may be internally threaded along the inner circumferential surface.

The pin part 120 may be coupled to the second through-hole 110. The pin part 120 may be screw-coupled to the inner circumferential surface of the second through-hole 110. The pin part 120 may be arranged in a second direction. The pin part 120 may extend through the second through-hole 110 to support the guide protrusion 440. The pin part 120 may be illustrated as a bolt or the like.

The interaxial distance between the steering column 200 and the motor shaft 420 may be varied depending on the rotation direction of the pin part 120, which is screw-coupled to and extends through the second through-hole 110 and supports the guide protrusion 440.

After the motor housing 410 is attached to the housing part 100 by screwing the fastening members 10, which extend through the first through-hole 431 formed in the flange 430, into the tapped hole 101 formed in the housing part 100, the pin part 120 presses the guide protrusion 440 by rotating the pin part 120, which is screw-coupled to the second through-hole 110 formed in the housing part 100 and supports the guide protrusion 440, in one direction.

The guide protrusion 440, which is pressed by the pin part 120, is moved in the second direction in which the steering column 200 is located, and the interaxial distance between the central axis AX1 of the steering column 200 and the central axis AX2 of the motor shaft 420 is adjusted accordingly. This makes it possible to adjust the backlash between the first gear part 300 and the second gear part 421.

As the motor housing 410 is moved in the second direction, the interaxial distance between the steering column 200 and the motor shaft 420 may be varied.

Conversely, by reverse rotation of the pin part 120 pressing the guide protrusion 440, the guide protrusion 440 may be moved opposite to the direction in which the steering column 200 is located. Accordingly, the interaxial distance between the central axis AX1 of the steering column 200 and the central axis AX2 of the motor shaft 420 may be adjusted. This makes it possible to adjust the backlash between the first gear part 300 and the second gear part 421.

As the motor housing 410 is moved in the second direction, the interaxial distance between the steering column 200 and the motor shaft 420 may be varied.

In the steering feedback actuators 1 and 2 according to the embodiments of the present disclosure, the interaxial distance between the steering column 200 having the first gear part 300 and arranged in the first direction and the motor shaft 420 having the second gear part 421 engaged with the first gear part 300 and arranged in the first direction alongside the steering column 200 may be adjusted, so that the backlash between the first gear part 300 and the second gear part 421 may be adjusted.

In the steering feedback actuators 1 and 2 according to the embodiments of the present disclosure, the first gear part 300 is formed of a metal material and the second gear part 421 engaged with the first gear part 300 is formed of a plastic material, so that noise generated by the backlash between the first gear part 300 and the second gear part 421 may be reduced.

## Claims

1. A steering feedback actuator comprising:
a housing part;
a steering column rotatably accommodated within the housing part and arranged in a first direction;
a first gear part coupled to the steering column so as to rotate with the steering column; and
an electric motor part including a motor housing coupled to the housing part to cover an opening of the housing part, and a motor shaft rotatably coupled to the motor housing and having a second gear part engaged with the first gear part.

2. The steering feedback actuator of claim 1, wherein the motor shaft is arranged in the first direction alongside the steering column.

3. The steering feedback actuator of claim 1 or 2, wherein the electric motor part further comprises a flange provided in the motor housing so as to be able to abut the housing part and having a first through-hole through which a fastening member to be fastened to a tapped hole in the housing part extends.

4. The steering feedback actuator of claim 3, wherein the first through-hole is provided as an elongated opening in a second direction intersecting the first direction, or has a diameter larger than that of the tapped hole.

5. The steering feedback actuator of claim 4, wherein the plurality of first through-holes are spaced apart from each other in a circumferential direction of the flange.

6. The steering feedback actuator of any one of claims 1 to 4, wherein the electric motor part further comprises a guide protrusion protruding from the motor housing in the first direction in a circumferential direction of the motor housing and inserted into the housing part.

7. The steering feedback actuator of claim 6, wherein a gap is defined between the guide protrusion and the opening to allow the motor housing to move in the second direction.

8. The steering feedback actuator of claim 7, wherein the housing part further comprises a second through-hole provided in the second direction, and the steering feedback actuator further comprises a pin part screw-coupled to the second through-hole to support the guide protrusion.

9. The steering feedback actuator of claim 8, wherein an interaxial distance between the steering column and the motor shaft is varied depending on a rotation direction of the pin part.

10. The steering feedback actuator of any one of claims 1 to 9, wherein the first gear part comprises a plastic material or a metal material, and the second gear part comprises a plastic material.
